# EUROPÄISCHE PATENTSCHRIFT

(11) **EP 0 828 890 B1**
(45) Veröffentlichungstag und Bekanntmachung des Hinweises auf die Patenterteilung: **11.08.1999**
(21) Anmeldenummer: 96917389.7
(22) Anmeldetag: 20.05.1996
(51) Int. Cl.: D21H 17/08, D21H 23/76

(54) **VERFAHREN ZUR PAPIERVEREDLUNG UNTER VERWENDUNG VON POLYISOCYANATEN MIT ANIONISCHEN GRUPPEN**
PAPER FINISHING PROCESS USING POLYISOCYANATES WITH ANIONIC GROUPS
PROCEDE DE FINITION DU PAPIER AU MOYEN DE POLYISOCYANATES A GROUPES ANIONIQUES

(30) Priorität: 01.06.1995 DE 19520092
(43) Veröffentlichungstag der Anmeldung: 18.03.1998
(73) Patentinhaber: BAYER AG, 51368 Leverkusen (DE)
(72) Erfinder: JANSEN, Bernhard, D-51061 Köln (DE); KÖNIG, Joachim, D-51519 Odenthal (DE); NOWAK, Peter, D-41539 Dormagen (DE)
(86) Internationale Anmeldenummer: EP9602168
(87) Internationale Veröffentlichungsnummer: WO9638629

(56) Entgegenhaltungen:
- EP-A- 0 582 166
- DE-A- 4 211 480
- US-A- 3 499 824
- US-A- 3 589 978
- DATABASE WPI Section Ch, Week 8034 Derwent Publications Ltd., London, GB; Class A97, AN 80-59599C XP002011519 & JP 55 090 699 A (LION AKZO KK) , 10.Juli 1980

## Beschreibung

Die Erfindung betrifft ein Verfahren zur Herstellung von veredeltem Papier mit stark verbesserter Naß- und Trockenfestigkeit, Leimung und Eigenretention unter Verwendung von a) Polyisocyanaten mit anionischen oder potentiell anionischen Gruppen und b) Polymeren mit kationischen oder potentiell kationischen Gruppen.

Die EP-A 582 166 betrifft wasserdispergierbare Polyisocyanate mit tertiären Aminogruppen und/oder Ammoniumgruppen, d.h. also mit kationischen oder latent kationischen Gruppen, und gegebenenfalls mit Polyethergruppen und ein Verfahren zur Herstellung von trockenfest und naßfest ausgerüstetem und/oder geleimtem cellulosehaltigem Material unter Verwendung dieser wasserdispergierbaren Polyisocyanate. Die Mitverwendung von kationischen Hilfsmitteln wie z.B. Retentionsmitteln wird angesprochen, wobei als Retentionsmittel übliche kationische Retentionsmittel und sogenannte Dualsysteme bestehend aus kationischen oder kationischen oder anionischen und gegebenenfalls partikulären Komponenten wie Kieselsolen erwähnt werden. In den Beispielen der EP-A 582 166 werden zusätzliche Retentionsmittel nicht mitverwendet. Der Leser gewinnt also den Eindruck, daß zusammen mit kationischen Polyisocyanaten Retentionsmittel allenfalls dann verwendet werden sollten, wenn sie wenigstens teilweise, vorzugsweise aber völlig aus kationischen Produkten bestehen, ohne daß allerdings eine Begründung dafür angegeben wird; Vor- oder Nachteile werden nicht erörtert.

Die DE-OS 4 211 480 betrifft ein Verfahren zur Naßverfestigung von Papier mit wasserdispergierbaren Polyisocyanaten. Die Produkte können gegebenenfalls auch mit üblichen kationischen Fixiermitteln und Retentionsmitteln, bevorzugt mit Naßverfestigungsmitteln gemeinsam, eingesetzt werden. Als Retentionsmittel in diesem Sinne werden kationische Polykondensate aus Polyaminen, vorzugsweise N-Methyl-bis-(3-aminopropyl)-amin, und Alkylendihalogeniden, vorzugsweise Dichlorethan, genannt. Die Wirkungen dieser gemeinsamen Verwendung von wasserdispergierbarem Polyisocyanat und kationischem Retentionsmittel werden in Beispiel 4 der DE-OS 4 211 480 beschrieben: Die Daten des Beispiels 4 lassen erkennen, daß die gemeinsame Zugabe 1. eines Polyethylenoxidgruppen-haltigen Polyisocyanats und 2. eines kationischen Retentionsmittels zwar zu einer starken (erwünschten) Erhöhung des Aschegehalts, aber auch zu einer (unerwünschten) Verminderung der Naßfestigkeit führt. Obwohl gemäß DE-OS 4 211 480 Carboxylgruppen-haltige Polyisocyanate als bevorzugte wasserdispergierbare Polyisocyanate erwähnt werden, die sich nach zumindest teilweiser Neutralisation der Carboxylgruppen leicht in Wasser dispergieren lassen, werden in den Beispielen nur nicht-ionische (Polyethergruppen enthaltende) wasserdispergierbare Polyisocyanate eingesetzt.

Überraschenderweise wurde nun gefunden, daß man nicht nur die sich im Aschegehalt widerspiegelnde Retention (bei füllstoffhaltigen Papiersorten), sondern auch die Trocken- und Naßfestigkeit sowie die Leimung verbessern kann, wenn man wasserdispergierbare Polyisocyanate mit anionischen (oder potentiell anionischen) Gruppen und als Retentionsmittel kationische (oder potentiell kationische) Verbindungen einsetzt.

Gegenstand der Erfindung ist also ein Verfahren zur Papierveredlung, wonach man
A) Polyisocyanat mit einem NCO-Gehalt von 1 bis 21,5, vorzugsweise 4 bis 20 Gew.-%, und 50 bis 5000, vorzugsweise 50 bis 3500 Milliäquivalenten anionischen und/oder potentiell anionischen Gruppen pro 100 g Polyisocyanat A und
B) Verbindung mit 5 bis 5000, vorzugsweise 50 bis 3500 Milliäquivalenten kationischen und/oder potentiell kationischen Gruppen pro 100 g Verbindung B
in die Pulpe, d.h. die wäßrige Cellulose-haltige Faserrohstoffsuspension (Masse-einsatz) oder
Verbindung B in die Pulpe und Polyisocyanat A auf die Oberfläche des Cellulose-haltigen Rohpapiers (Oberflächeneinsatz)
in solchen Mengen dosiert,
daß das Gewichtsverhältnis Faserrohstoff : A : B 100:(0,001 bis 25, vorzugsweise 0,1 bis 10):(0,001 bis 25, vorzugsweise 0,01 bis 10) beträgt - jeweils bezogen auf Feststoff (trocken).

Bevorzugte Polyisocyanate A besitzen ein als Zahlenmittel bestimmtes Molekulargewicht von 300 bis 25000, vorzugsweise 400 bis 5000.

Die Polyisocyanate A können durch Umsetzung
a) organischer Polyisocyanate mit einer mittleren NCO-Funktionalität von 1,8 bis 4,2,
b) NCO-reaktiver Verbindungen enthaltend (potentiell) anionische Gruppen und gegebenenfalls
c) Polyalkylenoxidalkohole, -amine und/oder -thiole
erhalten werden.

Als organische Polyisocyanate a) kommen aliphatische, cycloaliphatische, araliphatische, aromatische oder heterocyclische Polyisocyanate in Betracht, wie sie z.B. von W. Siefken in Liebigs Annalen der Chemie 562, Seiten 75 - 136, beschrieben sind.

Bevorzugte Polyisocyanate a) sind Verbindungen der Formel Q(NCO)ₙ mit einem mittleren Molekulargewicht unter 1 500, worin n eine Zahl von 2 bis 4, Q einen aliphatischen C₄-C₁₂-Kohlenwasserstoffrest, einen cycloaliphatischen C₆-C₁₅-Kohlenwasserstoffrest, einen araliphatischen C₇-C₁₅-Kohlenwasserstoffrest oder einen heterocyclischen C₂-C₁₂-Rest mit 1 bis 3 Heteroatomen aus der Reihe Sauerstoff, Schwefel, Stickstoff bedeuten, beispielsweise (i) Diisocyanate wie Ethylendiisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-2-isocyanatomethyl-cyclopentan, 1-Isocyanato-3,3,5-trimethyl-5-isocyanatomethyl-cyclohexan, 2,4- und 2,6-Hexahydrotoluylendiisocyanat sowie beliebige Gemische dieser Isomeren, Hexahydro-1,3-und/oder -1,4-phenylen-diisocyanat, Perhydro-2,4'-und/oder -4,4'-diphenylmethan-diisocyanat, 1,3- und 1,4-Phenylen-diisocyanat, 2,4- und 2,6-Toluylendiisocyanat sowie beliebige Gemische dieser Isomeren, Diphenylmethan-2,4'- und/oder -4,4'-diisocyanat, Naphthalin-1,5-diisocyanat, Uretdiongruppen enthaltende Polyisocyanate wie z.B. das Bis-(6-isocyanatohexyl)-uretdion oder das die Uretdion-Struktur enthaltende Dimere des 1-Isocyanato-3,3,5-trimethyl-5-isocyanatomethylcyclohexans und beliebige Mischungen der vorgenannten Polyisocyanate; (ii) tri-und höherfunktionelle Polyisocyanate wie die Isomeren der Triisocyanatotriphenylthiophosphatreihe und ihre Gemische; die Isomeren der Triisocyanatotriphenylmethanreihe (wie Triphenylmethan-4,4',4"-triisocyanat) und ihre Gemische; Polyphenyl-polymethylenpolyisocyanate, wie sie durch Anilin/Formaldehyd-Kondensation und anschließende Phosgenierung erhalten werden; (iii) durch Allophanatisierung, Trimerisierung, Biuretisierung oder Urethanisierung aus den Polyisocyanaten (i) und/oder (ii) hergestellte Verbindungen, die mindestens 3 Isocyanatgruppen pro Molekül aufweisen. Beispiele für durch Trimerisierung hergestellte Polyisocyanate sind das durch Isocyanuratbildung erhältliche Trimerisat des 1-Isocyanato-3,3,5-trimethyl-5-isocyanatomethylcyclohexans und die durch Trimerisierung von Hexamethylendiisocyanat, gegebenenfalls im Gemisch mit 2,4-Diisocyanatotoluol, erhältlichen Isocyanuratgruppen enthaltenden Polyisocyanate. Beispiele für durch Biuretisierung hergestellte Polyisocyanate sind Tris-(isocyanatohexyl)-biuret und dessen Gemische und seinen höheren Homologen, wie sie z.B. gemäß DE-OS 23 08 015 zugänglich sind. Beispiele für durch Urethanisierung hergestellte Polyisocyanate sind die Umsetzungsprodukte von Diisocyanaten (i) mit mindestens 3-wertigen, vorzugsweise 3-oder 4-wertigen niedermolekularen Polyolen in einem solchen Verhältnis, daß bei Umsetzung sämtlicher NCO-reaktiver Hydroxylgruppen der Polyole pro Molekül des erhaltenen Produkts durchschnittlich mindestens 2,5, vorzugsweise mindestens 3 freie Isocyanatgruppen enthalten sind. Solche Produkte umfassen beispielsweise die Umsetzungsprodukte von l-Isocyanato-3,3,5-trimethyl-5-isocyanatomethyl-cyclohexan, von Hexamethylendiisocyanat und Toluylendiisocyanat (einschließlich dessen Isomerengemische) sowie Diisocyanatodiphenylmethan (einschließlich dessen Isomerengemische) mit unterschüssigen Mengen an C₃-C₁₀-Polyolen mit 3 oder 4 Hydroxylgruppen, wie Trimethylolethan oder -propan oder Pentaerythrit. Diese Polyole können beispielsweise auch Esterstrukturen und/oder Säureamidstrukturen enthalten. Man kann diese Urethangruppen aufweisenden Polyisocyanate (iii) durch Umsetzung des niedermolekularen Polyols mit einem hohen Überschuß an Diisocyanat (i) und anschließende destillative Entfernung des überschüssigen Diisocyanats herstellen. Man kann anstelle der Urethangruppen-haltigen höherfunktionellen Polyisocyanate (iii) auch Verbindungen einsetzen, deren Urethangruppen ganz oder teilweise durch Harnstoffgruppen ersetzt sind; solche Verbindungen kann man durch Mitverwendung niedermolekularer Polyamine bei der Umsetzung mit den Diisocyanaten (i) erhalten.

Generell können als Aufbaukomponenten (b) für das Einbringen ionischer Gruppen Verbindungen eingesetzt werden, die pro Molekül neben mindestens einer NCO-reaktiven Gruppe noch mindestens eine anionische Gruppe (wie z.B. Carboxylat-, Sulfonat-, Phosphat-, Phosphonat- oder Phosphinatgruppe) enthalten. Als Aufbaukomponenten (b) für das Einbringen potentiell anionischer Gruppen eignen sich Verbindungen, die pro Molekül neben mindestens einer NCO-reaktiven Gruppe mindestens eine zur Bildung einer anionischen Gruppe befähigte Gruppe enthalten. Solche potentiell anionischen Gruppen sind beispielsweise Carboxyl-, Sulfo-, Phosphonsäure-, Phosphorsäure- und Phosphinsäuregruppen.

Bevorzugte Komponenten (b) sind also vor allem Verbindungen, die zur Salzbildung befähigte Carboxyl- oder Sulfogruppen aufweisen:
1) Hydroxy- und Mercapto-carbonsäuren, wie Glykolsäure, Thioglykolsäure, Milchsäure, Trichlormilchsäure, Dimethylolpropionsäure, Äpfelsäure, Dioxymaleinsäure, Dioxyfumarsäure, Weinsäure, Dioxyweinsäure, Schleimsäure, Zuckersäure, Zitronensäure, Salicylsäure, 2,6-Dioxybenzoesäure, Protocatechusäure, α-Resorcylsäure, β-Resorcylsäure, Hydrochinon-2,5-dicarbonsäure, 4-Hydroxyisophthalsäure, 4,6-Dihydroxyisophthalsäure, Oxyterephthalsäure, 5,6,7,8-Tetrahydro-naphthol-(2)-carbonsäue-(3), 1-Hydroxynaphthoesäure-(2), 2,8-Dihydroxynaphthoesäure-(3), β-Oxypropionsäure, 2,2-Dimethyl-3-hydroxypropionsäure und m-Oxybenzoesäure,
2) Aminocarbonsäuren, wie Oxalursäure, Anilidoessigsäure, 2-Hydroxycarbazol-carbonsäure-(3), Glycin, Sarkosin, Methionin, α-Alanin, β-Alanin, 6-Aminocapronsäure, 6-Benzylamino-2-chlorcapronsäure, 4-Aminobuttersäure, Asparaginsäure, Glutaminsäure, Histidin, Anthranilsäure, 2-Ethylaminobenzoesäure, N-(2-Carboxyphenyl)-aminoessigsäure, 2-(3'-Aminobenzolsulfonyl-amino)-benzoesäure, 3-Aminobenzoesäure, 4-Aminobenzoesäure, N-Phenylaminoessigsäure, 3,4-Diaminobenzoesäure, 5-Aminobenzoldicarbonsäure und 5-(4'-Aminobenzoyl-amino)-2-aminobenzoesäure,
3) Hydroxysulfonsäuren, wie 2-Hydroxyethansulfonsäure, Phenolsulfonsäure(2), Phenolsulfonsäure-(3), Phenolsulfonsäure-(4), Phenoldisulfonsäure-(2,4), 2-Hydroxy-benzoesäure-(1)-sulfonsäure-(5)' Naphthol-(1)-sulfonsäure. Naphthol-(1)-disulfonsäure,8-Chlor-naphthol-(1)-disulfonsäure, Naphthol-(1)-trisulfonsäure, Naphthol-(2)-sulfonsäure-(1), Naphthol-(2)-trisulfonsäure, 1,7-Dihydroxynapthalinsulfonsäure-(3 ), 1,8-Dihydroxynaphthalindisulfonsäure-(2,4), Chromotropsäure, 2-Hydroxynaphthoesäure-(3)-sulfonsäure-(6) und 2-Hydroxycarbazolsulfonsäure-(7), und
4) Aminosulfonsäuren, wie Amidosulfonsäure, Hydroxylaminmonosulfonsäure, Hydrazindisulfonsäure, Sulfanilsäure, N-Phenylaminomethansulfonsäure, 4,6-Dichloranilin-sulfonsäure-(2), Phenylendiamin-(1,3)-disulfonsäure-(4,6), N-Acetylnaphthylamin-(1)-sulfonsäure-(3), Naphthylamin-(1)-sulfonsäure. Naphthylamin-(2)-sulfonsäure, Naphthylamindisulfonsäure, Naphthylamintrisulfonsäure, 4,4'-Di-(p-aminobenzoylamino)-diphenylharnstoff-disulfonsäure-(3,3'), Phenylhydrazindisulfonsäure-(2,5), 2,3-Dimethyl-4-amino-azobenzoldisulfonsäure-(4',5), 4'-Aminostilbendisulfonsäure-(2,2')-<4-azo4>anisol, Carbazoldisulfonsäure-(2,7), Taurin, Methyltaurin, Butyltaurin, 3-Aminobenzoesäure-(1)-sulfonsäure-(5), 3-Aminotoluol-N-methansulfonsäure, 6-Nitro-1,3-dimethylbenzol-4-sulfaminsäure, 4,6-Diaminobenzoldisulfonsäure-(1,3), 2,4-Diaminotoluolsulfonsäure-(5), 4,4'-Diaminodiphenyldisulfonsäure-(2,2'), 2-Aminophenolsulfonsäure-(4), 4,4'-Diaminodiphenylethersulfonsäure-(2), 2-Amino-anisol-N-methansulfonsäure, 2-Amino-diphenylaminsulfonsäure.

Als Salzbildner eignen sich anorganische und organische Basen, z.B. Natriumhydroxyd, Kaliumhydroxyd, Kaliumcarbonat, Natriumhydrogencarbonat, Ammoniak, primäre, sekundäre und tertiäre Amine.

Schließlich können auch organische Phosphorverbindungen als Verbindungen, die zur Salzbildung fähig sind, verwendet werden, wie z.B. Bis-(α-hydroxyisopropyl)phosphinsäure, Hydroxyalkanphosphonsäure und Phosphorsäure-bis-glykolester.

Die Umsetzung der Reaktionsteilnehmer kann mit oder auch ohne Lösungsmittel erfolgen.

Bevorzugte Komponenten (b) sind also Polyhydroxycarbon- und -sulfonsäuren, Polyaminocarbon- und -sulfonsäuren und die Salze dieser Verbindungen (vor allem Alkali- und Ammoniumsalze, insbesondere die Natrium- und Kaliumsalze). Sie können der Formel

(H-Y)ₙ-X-(A)ₘ

entsprechen, worin
- Y: für O und/oder NH steht,
- X: für C₁-C₁₅-Alkylen, C₅-C₁₅-Cycloalkylen oder einen Rest der Formel 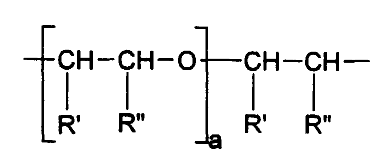 wobei R' und R" unabhängig voneinander Wasserstoff oder Methyl mit der Maßgabe, daß mindestens einer der Reste Wasserstoff ist, und a eine Zahl von 0 bis 15 bedeuten,
- A: für -COOH, -SO₃H, -COO⁻M⁺ oder -SO₃⁻Me⁺ mit Me als Metall- oder Ammoniumkation steht, welches im Fall mehrwertiger Metalle für 1 Äquivalent eines solchen Metallions steht, und n und m ganze Zahlen von 1 bis 5 bedeuten.

Selbstverständlich können auch als Komponenten (b) Sulfonat- oder Carboxylatdiole verwendet werden; geeignete Verbindungen dieser Klasse sind beispielsweise in der DE-OS 24 46 440 beschrieben. Sie entsprechen im allgemeinen den Formeln 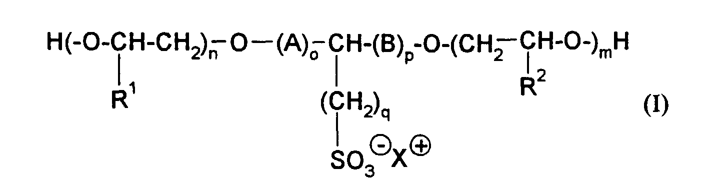 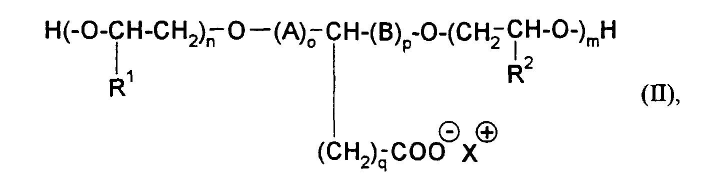 worin
- A und B: für gleiche oder verschiedene zweiwertige aliphatische Kohlenwasserstoffreste mit 1 bis 6 Kohlenstoffatomen stehen,
- R¹ und R²: unabhängig voneinander für Wasserstoff, einen aliphatischen Kohlenwasserstoffrest mit 1 bis 4 Kohlenstoffatomen oder einen Phenylrest stehen,
- X^{⊕}: für ein Alkalimetallkation oder eine gegebenenfalls substituierte Ammoniumgruppe steht,
- n und m: unabhängig voneinander für Null oder Zahlen von 1 bis 30 stehen,
- o und p: für jeweils Null oder 1 stehen und
- q: für Null, 1 oder 2 steht.

Bevorzugte Kationen X^{⊕} umfassen Kalium-, Natrium- und Ammoniumionen, wobei der Ammonium-Stickstoff mit bis zu 4 organischen C₁-C₁₀-Resten substituiert sein kann, wobei anstelle zweier solcher Substituenten auch ein zweiwertiger 4- oder 5-gliedriger, gegebenenfalls Heteroatome (wie Sauerstoff, Stickstoff, Schwefel) enthaltender Rest treten kann, der zusammen mit dem zu X^{⊕} gehörenden Stickstoffatom einen Heterocyclus, beispielsweise einen Morpholin- oder Hexahydropyridin-Ring bildet.

Bevorzugte Komponenten (c) umfassen ein- und mehrwertige, insbesondere einwertige Polyetheralkohole. Geeignete Komponenten (c) umfassen also vor allem auf einwertigen Alkoholen gestartete Poly-C₂-C₆-, vorzugsweise -C₂-C₃-alkylenether. Anstelle von Hydroxyl-Endgruppen können die Polyalkylenether (c) auch Amino- oder Mercapto-Endgruppen tragen.

Die Polyisocyanate A weisen vorzugsweise einen Gehalt an eingebauten Polyalkylenethergruppen, berechnet als wiederkehrende Alkylenoxygruppen [0-Alkylen-]ₓ, von 3 bis 25 Gew.-%, bezogen auf Polyisocyanat A, auf. Vorzugsweise enthalten die Polyalkylenethergruppen zu 50 bis 100 Gew.-% Ethylenoxideinheiten und neben diesen vorzugsweise ausschließlich Propylenoxideinheiten. Bevorzugt sind dementsprechend also Ethylenoxid-Polyether und Ethylenoxid/Propylenoxid-Mischpolyether mit einem überwiegenden Gewichtsanteil an Ethylenoxideinheiten. Reine Ethylenoxid-Polyether sind bevorzugt. Die eingebauten Polyethylenoxidblöcke können ein mittleres Molekulargewicht von 220 bis 6000, vorzugsweise von 500 bis 3000, besitzen.

Die Polyisocyanate A können hergestellt werden, indem man die Polyisocyanate (a) mit den Komponenten (b) und gegebenenfalls (c) gleichzeitig oder in beliebiger Reihenfolge nacheinander umsetzt. Eine bevorzugte Reaktionstemperatur liegt bei 50 bis 120°C; die Reaktion ist im allgemeinen- innerhalb 1 bis 3 Stunden abgeschlossen.

Obwohl es oft von besonderem Vorteil ist, auf organische Lösungsmittel völlig zu verzichten, können bei der Herstellung der Polyisocyanate A natürlich auch organische Lösungsmittel eingesetzt werden. Im Falle hochviskoser Polyisocyanate A ist die Mitverwendung organischer Lösungsmittel regelmäßig angebracht.

Bevorzugte organische Lösungsmittel umfassen unter anderem Ketone wie Aceton, Methylethylketon und Cyclohexanon, Ether wie Diethyl- und Dibutylether, Tetrahydrofuran und Dioxan, Ether und/oder Ester von Ethylenglykol und Propylenglykol wie Ethylenglykolmonomethyl- und -monoethylether, Ethylenglykolmonomethyl- und -monoethyletheracetat, C₂-C₄-Carbonsäure-C₁-C₆-alkylester wie Essigsäureethyl- und -butylester, Amide wie N,N-Dimethylformamid, N,N-Dimethylacetamid und N-Methylpyrrolidon, Sulfolan, N-Methyl-caprolactam, Propylenglykol-diacetat, Benzin, Aromaten wie Benzol, Toluol und Xylole. Die Verwendung organischer Lösungsmittel, die NCO-reaktive Gruppen enthalten, wie z.B. Methanol, Ethanol, n- oder Isopropanol, im Laufe der Herstellung der Polyisocyanate A wird nicht empfohlen. Die organischen Lösungsmittel können, falls gewünscht, aus den Polyisocyanaten A wieder entfernt werden, z.B. durch Destillation.

Die Polyisocyanate A eignen sich hervorragend zur Herstellung wäßriger Dispersionen. Sie finden auch bevorzugt in dieser Form Verwendung. Der Gehalt dieser wäßrigen Dispersionen an Polyisocyanaten A kann innerhalb weiter Grenzen schwanken und beträgt in der Regel 20 bis 80, vorzugsweise 25 bis 50 Gew.-%. Das Dispergieren der Polyisocyanate A kann durch Zugabe des Polyisocyanats A zu Wasser erfolgen. Die Vereinigung erfolgt zweckmäßigerweise unter Rühren. Der Dispergiervorgang kann in Abwesenheit oder in Gegenwart organischer, vorzugsweise wassermischbarer, Lösungsmittel erfolgen.

Man kann auf die Verwendung organischer Lösungsmittel beim Dispergieren meistens verzichten, weil die Polyisocyanate A mit Wasser im allgemeinen meistens spontan Dispersionen bilden.

Die Temperatur beim Dispergieren kann im allgemeinen 20 bis 100, vorzugsweise 30 bis 80°C betragen. Die erhaltenen wäßrigen Dispersionen enthalten die Polyisocyanate A im allgemeinen als Teilchen mit einem mittleren Durchmesser d₅₀ von 50 bis 500, vorzugsweise 100 bis 300 µm.

Der mittlere Teilchendurchmesser d₅₀ ist der Durchmesser, oberhalb und unterhalb dessen jeweils 50 Gew.-% der Teilchen liegen. Er kann mittels Ultrazentrifugen-Messungen (W. Scholtan, H. Lange, Kolloid. Z. und Z. Polymere 250 (1972), 782 - 796) oder mittels Elektronenmikroskopie und anschließender Teilchenauszählung (G. Kämpf, H. Schuster, Angew. Makromolekulare Chemie 14 (1970), 111 - 129) bestimmt werden.

Als Verbindungen B mit kationischen oder potentiell kationischen Gruppen eignen sich alle Verbindungen mit primären, sekundären und tertiären Aminogruppen und daraus durch Protonierung oder Alkylierung erhältlichen Ammoniumgruppen in den anspruchsgemäßen Mengen. Bevorzugte (potentiell) kationische Gruppen sind vor allem die Gruppen -NR"'₂, -N^{⊕}R₃ und -N^{⊕}HR"'₂, wobei R"' für Wasserstoff oder C₁-C₁₀-Alkyl steht.

Bevorzugte Verbindungen B enthalten 2 bis 3, vorzugsweise 2 bis 12 C-Atome pro oben genannte Amino- bzw. Ammoniumgruppe. Bevorzugte Verbindungen B besitzen als Zahlenmittel bestimmte Molekulargewichte von 500 bis 10⁸, vorzugsweise von 500 bis 10⁷. Bevorzugte Verbindungen B umfassen solche (potentiell) kationischen Verbindungen, wie sie als Retentionsmittel empfohlen werden.^{1,}^{2,}³⁾. Alle im folgenden genannten Molekulargewichte sind, sofern nicht anders angegeben, ebenfalls als Zahlenmittel bestimmt.
¹ D. Eklund und T. Lindström, Paper Chemistry, DT Paper Science Publications, Grankulla 1991
² J. C. Roberts (Ed.), Paper Chemistry, Blackie & Sons Ltd., Glasgow, London 1991
³ G. Tegge, Stärke und Stärkederivate, Behr's Verlag, Hamburg, 2. Auflage 1988, S. 188 bis 189.

Die Verbindungen B umfassen beispielsweise kationische Stärke, wie sie z.B. durch Einwirkung von Aminoalkylhalogeniden oder -epoxiden auf Stärke in alkalischem Milieu, also z.B. auf eine alkalische Stärkesuspension, bei erhöhter Temperatur (z.B. 100°C) erhältlich ist; vgl. "Methoden der Organischen Chemie" (Houben-Weyl), Bd. XIV/2, Georg Thieme Verlag, Stuttgart 1963, S. 913 und dort zitierte Literatur.

Bevorzugte potentiell kationische Gruppen dieser Art sind die N,N-Diethylaminoethyl- und -propylethergruppen. Zur Einführung tertiärer Aminogruppen eignen sich vorzugsweise tertiäre Amine, die einen β-halogenierten Alkyl-, einen 2,3-Epoxypropyl- oder einen 3-Chlor-2-hydroxypropylrest enthalten (US-PS 2 970 140). Das am häufigsten verwendete Reagenz zur Einführung tertiärer Aminogruppen ist N,N-Diethylaminoethylchlorid-hydrochlorid. Zur Einführung quaternärer Ammoniumgruppen eignen sich Epoxyverbindungen wie 2,3-Epoxypropyl-trimethylammoniumchlorid (US-PS 3 649 616). Die kationischen Stärken besitzen im allgemeinen einen Stickstoffgehalt von 0,1 bis 0,4 Gew.-%.

Zu den kationischen Stärken gehören auch die aus Dialdehydstärke durch Behandlung mit Betain-hydrazid-Hydrochlorid erhältlichen Stärkederivate; s. Literatur Fußnote 2, S. 90 bis 92.

Die Verbindungen B umfassen weiterhin beispielsweise Polydialkyldimethylammoniumchlorid (Poly-DADMAC), d.h. Homo- und Copolymerisate des Dialkyldimethylammoniumchlorids, die Pyrrolidiniumgruppen der Struktur 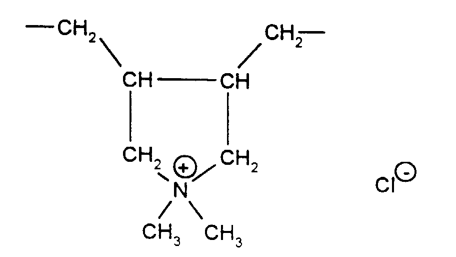 enthalten. Solche Verbindungen werden beispielsweise in US-PS 4 742 134 beschrieben (Molekulargewichte üblicherweise 100 000 - 600 000).

Die Verbindungen B umfassen weiterhin Polyethylenimine, d.h. durch sauer katalysierte ringöffnende Polyaddition von Ethylenimin erhältliche lineare und verzweigte Produkte, die gegebenenfalls mit 1,2-substituierten elektrpphilen Ethanderivaten, wie 1,2-Dichlorethan, vernetzt sein können. Hochmolekulare Polyethylenimine in Form alkalischer Lösungen mit einem Feststoffgehalt von 30 bis 50 Gew.-% sind im Handel erhältlich. Diese Verbindungsklasse ist in "Methoden der Organischen Chemie" (Houben-Weyl), Bd. E 20/2, Georg Thieme Verlag, Stuttgart, S. 1483 ff. und in Ullmann's Encyclopedia of Industrial Chemistry, Fifth Ed., Vol. A3, Seite 240, beschrieben (Molekulargewichte 450 - 100 000).

Bevorzugte Verbindungen B umfassen auch Homo- und Copolymerisate von Dimethylaminopropylacrylamid bzw. -methacrylamid. Solche Polymerisate, die vorzugsweise aus 50 bis 100 Gew.-% quaterniertem Dimethylaminopropyl(meth)acrylamid und 0 bis 50 Gew.-% Acrylamid, Acrylsäure, Methacrylsäure oder deren Mischungen erhältlich sind und Grenzviskositäten unter 150 ml/g, gemessen in 10 gew.-%iger wäßriger Natriumchloridlösung bei 25°C, besitzen. Derartige Polymerisate werden beispielsweise in der DE-OS 3 905 049 beschrieben.

Bevorzugte Verbindungen B umfassen weiterhin aus Polyaminen, wie z.B. Diethylentriamin, Triethylentetramin, Tetraethylenpentamin, Pentaethylenhexamin, und Cyanamid oder dessen Derivaten (wie z.B. Guanidin) oder deren Polymeren (wie z.B. Dicyandiamid, Biguanidin) im Molverhältnis 2:1 bis 1:2, gegebenenfalls in Gegenwart von Ammoniumsalzen, unter Ammoniakabspaltung erhältliche Polykondensate, wie sie beispielsweise in der DE-OS 3 940 481 beschrieben sind. Solche Verbindungen haben üblicherweise Molekulargewichte von 1 000 - 10⁵.

Bevorzugte Verbindungen B sind auch aus Polyamidaminen und Alkylendihalogeniden, vorzugsweise 1,2-Dichlorethan, erhältliche Polykondensate mit einem als Zahlenmittel bestimmten Molekulargewicht von mindestens 5000 und einer Viskosität, gemessen bei 25°C an einer 20 bis 60 gew.-%igen wäßrigen Lösung, von 50 bis 4000 mPa.s. Ausgangsprodukte hierfür sind vorzugsweise Polyamidamine mit einem als Zahlenmittel bestimmten Molekulargewicht von 2000 bis 20000 aus Polyaminen, wie sie durch Umsetzung von 1,2-Dichlorethan mit wäßrigem Ammoniak und nachfolgende Entfernung von Ethylendiamin, Diethylentriamin und Triethylentetramin anfallen, und aliphatischen Dicarbonsäuren wie Bernstein-, Glutar-, Adipin- oder Sebacinsäure im Molverhältnis 0,75 bis 1,3 erhalten werden können. Das Verhältnis Alkylendihalogenid/Polyamidamin beträgt dabei vorzugsweise 0,01 bis 0,1 Mol Alkylendihalogenid pro Mol basischem Stickstoff des Polyamidamins; vgl. DE-OS 2 756 431 und 3 721 057. Die Molekulargewichte können bis zu 10⁷ betragen.

Bevorzugte Verbindungen B sind auch aus Polyaminen und/oder Polyamidaminen und Epichlorhydrin erhältliche Polykondensate mit einer Viskosität von 10 bis 150 mPa.s, gemessen bei 25°C an einer 15 gew.-%igen wäßrigen Lösung, wie sie beispielsweise aus den DE-OS 1 906 450, 2 756 431 und 4 136 289 bekannt sind. Danach werden vorzugsweise 0,3 bis 0,8 Mol Epichlorhydrin pro Mol insgesamt vorhandenen basischen Stickstoffs der Polyamine bzw. Polyamidamine umgesetzt.

Bevorzugte solche Polykondensate sind selbstvernetzende, wasserlösliche Reaktionsprodukte von Epihalogenhydrinen oder α-Dihalogenhydrinen, die aus Epihalogenhydrinen und/oder α-Dihalogenhydrinen, wasserlöslichen, basischen Polyamiden und wasserlöslichen, mindestens 2 durch wenigstens 3 Kohlenstoffatome und gegebenenfalls noch durch Sauerstoff- oder Schwefelatome voneinander getrennte Stickstoffatome und mindestens 2 an verschiedene Stickstoffatome gebundene Wasserstoffatome enthaltenden Polyaminen hergestellt worden sind.

Als wasserlösliche Polyamine, die den selbstvernetzenden, wasserlöslichen Reaktionsprodukten zugrunde liegen, seien beispielsweise genannt:
wasserlösliche, aliphatische Polyamine, wie 1,3-Bis-(2-aminoethylamino)propan, 3-(3-Diethylamino-propylamino)-propylamin, Bis-(2-amino-ethyl)ether, 2,2'-Bis-methylamino-diethylether, 2,2'-Bis-(2-amino-ethylaminohdiethylether, Bis-(3-amino-propyl)ether, Bis-(3-amino-propyl)sulfid, 1,6-Bis-(2-amino-ethylamino)-hexan, 1,6-Bis-(3-amino-propylamino)-hexan, Bis-(6-amino-n-hexyl)-amin und 1,3-Diamino-butan,
und insbesondere Polyalkylenpolyamine der Formel 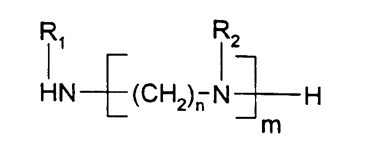 in der
   - R₁ und R₂: unabhängig voneinander Wasserstoff oder einen gegebenenfalls durch eine Amino- oder Hydroxygruppe substituierten C₁-C₄-Alkylrest,
   - m: eine Zahl von 1 bis 8, vorzugsweise 2 bis 4, und
   - n: eine Zahl von 3 bis 10, vorzugsweise 3 bis 6,
   bedeuten, z.B. 1,3-Diamino-propan, 1-Amino-3-methylamino-propan, 1,3-Bis-(2-hydroxy-ethylaminohpropan, 1,4-Diamino-butan, 1,4-Bis-methylamino-butan, N-(3-Amino-propyl)-tetramethylendiamin, N,N'-Bis-(3-amino-propyl) -tetramethylendiamin und vor allem Bis-(3-amino-propyl)-amin und Hexamethylendiamin,
   ferner Polyamine der Formel 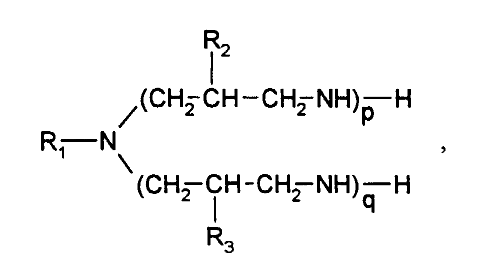 in der
   - R₁: einen gegebenenfalls durch eine Amino- oder Hydroxygruppe substituierten C₁-C₁₈-Alkylrest,
   - R₂ und R₃: unabhängig voneinander Wasserstoff oder eine Methylgruppe und
   die Summe p + q eine Zahl von 1 bis 20, vorzugsweise 2 bis 5
   bedeuten, z.B. Ethyl-bis-(3-amino-propyl)-amin, 2-Hydroxyethyl-bis-(3-aminopropyl)-amin, n-Butyl-bis-(3-amino-propyl)-amin, Tris-(3-amino-propyl)-amin und vor allem Methyl-bis-(3-amino-propyl)-amin.

Ferner kommen auch wasserlösliche, cycloaliphatische und araliphatische Polyamine, wie 1,4-Diamino-cyclohexan, 1-Aminomethyl-5-amino-1,3,3-trimethylcyclohexan, 1,3-Bis-aminomethylbenzol und Benzyl-bis-(3-amino-propyl)-amin in Betracht.

Als wasserlösliche, basische Polyamide, die den selbstvernetzenden, wasserlöslichen Reaktionsprodukten zugrunde liegen, kommen insbesondere in Betracht:

Umsetzungsprodukte von gesättigten aliphatischen C₄-C₁₀-Dicarbonsäuren, wie Bemsteinsäure, Glutarsäure, Adipinsäure, Diglykolsäure oder Sebazinsäure, oder deren funktionellen Derivaten, wie Anhydriden und Estern, mit aliphatischen Polyaminen, die mindestens 2 primäre Aminogruppen und mindestens eine sekundäre oder tertiäre Aminogruppe enthalten; solche Amine sind z.B. Methylbis-(3-amino-propyl)-amin, Ethyl-bis-(3-amino-propyl)-amin, 2-Hydroxyethyl-bis-(3-amino-propyl)-amin, N-(3-Amino-propyl)-tetramethylendiamin und N,N'-Bis-(3-amino-propyl)-tetramethylendiamin,
insbesondere aber Polyalkylenpolyamine der Formel 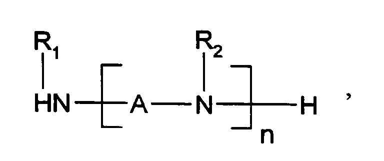 in der
- A: einen C₂-C₈-Alkylenrest,
- R₂ und R₃: unabhängig voneinander Wasserstoff oder einen gegebenenfalls durch eine Hydroxy- oder Aminogruppe substituierten C₂-C₁₀-Alkylrest und
- n: eine Zahl von 2 bis 5
bedeuten, wie Di-propylen-(1,2)-triamin, Bis-(3-amino-propyl)-amin, Tri-propylen-(1,2)-tetramin und vor allem Diethylentriamin, Triethylentetramin und Tetraethylenpentamin.

Beispiele für besonders bevorzugte Ausgangspolyamine sind: Diethylentriamin, Triethylentetramin, Tetraethylenpentamin, Pentaethylenhexamin, Hexaethylenheptamin, Dipropylentriamin, Dihexamethylentriamin, N-Methyl-bis-(3-aminopropyl)-amin, Tris-(2-aminoethyl)amin, Piperazin, Bis(piperazinyl)ethan, N-(2-aminoethyl)-piperazin, Bisaminoethylpiperazin, Bisaminopropylpiperazin.

Als Polyamidamin-Ausgangskomponente eignen sich Polyamidamine aus
a) aliphatischen und/oder aromatischen Dicarbonsäuren und
b) Polyaminen, die mindestens zwei zur Amidbildung befahigte Aminogruppen und mindestens eine weitere sekundäre oder tertiäre Aminogruppe enthalten und gegebenenfalls
c) Polyaminen, die zwei zur Amidbildung befähigte Aminogruppen, aber keine weiteren sekundären und tertiären Aminogruppen enthalten, und gegebenenfalls
d) ω-Aminocarbonsäuren und/oder Lactamen,
wobei bevorzugt jeweils, bezogen auf 1 Mol der Komponente a), 0,8 bis 1,2 Mol der Komponente b) und gegebenenfalls bis zu 0,8 Mol der Komponente c) und gegebenenalls bis zu 1,5 Mol der Komponente d) eingesetzt werden, mit der Maßgabe, daß das Molverhältnis (b+c):a Werte zwischen 0,8:1 und 1,2:1 annimmt.

Bevorzugte Dicarbonsäuren a) umfassen Oxalsäure, Malonsäure, Bernsteinsäure, Glutarsäure, Adipinsäure, Sebacinsäure, Isophthalsäure, Terephthalsäure, Maleinsäure und Itaconsäure.

Bevorzugte Polyamine b) und c) umfassen Diethylentriamin, Triethylentetramin, Tetraethylenpentamin, Pentaethylenhexamin, Hexaethylenheptamin, Dipropyltriamin, Dihexamethylentriamin, N-Methyl-bis-(3-aminopropyl)amin, Tris-(2-aminoethyl)amin, N-(2-aminoethyl)piperazin, Bisaminoethylpiperazin, Bisaminopropylpiperazin, Ethylendiamin, Diaminopropan, 1,6-Diaminohexan, N-(2-hydroxyethyl)ethylendiamin, N,N'-Dimethylethylendiamin, N-Methyl-1,3-diaminopropan, Isophorondiamin, 4,4'-Diamino-dicyclohexylmethan, Piperazin.

Die ω-Aminocarbonsäuren und Lactame d) umfassen Aminocapronsäure, 11-Aminoundecansäure, Caprolactam und Lauryllactam.

Sobald die gewünschte Viskosität erreicht ist, kann durch Säurezusatz eine vollständige vorzeitige Vernetzung verhindert werden. Die Molekulargewichte derartiger Produkte können 10³ bis 10⁶ betragen.

Weitere bevorzugte Verbindungen B sind vernetzte Polyalkylenpolyamine mit einer Viskosität von mindestens 100 mPa.s, gemessen bei 20°C an einer 20 gew.-%igen wäßrigen Lösung, wie sie z.B. durch partielle Amidierung von Polyalkylenpolyaminen mit Carbonsäuren, Carbonsäureestern, Carbonsäureanhydriden oder Carbonsäurehalogeniden und anschließende Vernetzung mit 0,001 bis 10 Gewichtsteilen eines mindestens bifunktionellen Vernetzers pro Gewichtsteil partiell amidiertem Polyalkylenpolyamin erhalten werden können. Derartige Produkte werden beispielsweise in der DE-OS 4 240 110 beschrieben.

Bevorzugte Verbindungen B sind weiterhin Melamin/Formaldehyd-Kondensate, wie sie beispielsweise in "Methoden der Organischen Chemie" (Houben-Weyl), Bd. XIV/2, Georg Thieme Verlag, Stuttgart 1963, S. 357 f. beschrieben sind. Bevorzugte Melamin/Formaldehyd-Kondensate sind beispielsweise durch säurekatalysierte Umsetzung von 1 bis 7 Mol Formaldehyd pro Mol Melamin erhältiche N-Methylol-ethergruppen und/oder Methylenbrücken zwischen zwei Stickstoffatome enthaltende Kondensate.

Bevorzugte Verbindungen B sind auch (potentiell) kationische Polyacrylamide, wie sie entweder durch Copolymerisation von Acrylamid und kationischen Vinylmonomeren, wie z.B. Dialkylaminoethylacrylat bzw. -methacrylat, vorzugsweie Dimethylaminoethylacrylat bzw. -methacrylat, oder Acryloylethyltrimethylammoniumchlorid oder Methacrylamidopropyl-trimethylammoniumchlorid, oder durch kationische Modifizierung nichtionischer Polyacrylamide, z.B. durch Umsetzung mit Dimethylamin und Formaldehyd (A. Einhorn in Liebigs Ann. 343 (1905), 207), erhalten werden können; vgl. Literatur entsprechend obige Fußnote 2, S. 45 bis 48. Die Molekulargewichte dieser Substanzen können bis zu 10⁷ betragen.

Bevorzugte Verbindungen B sind auch Vinylaminhomo- und -copolymerisate, wie sie beispielsweise in der DE-OS 4 241 117 und in den EP-A 580 078 und 580 079 beschrieben sind. Dabei handelt es sich um teilweise oder vollständig verseifte Polyvinylcarbonsäureamide, vorzugsweise -formamide. Bevorzugte solche Copolymerisate sind z.B. durch Copolymerisation aus
a) 5 bis 99 Mol-% N-Vinylcarbonsäureamiden der Formel 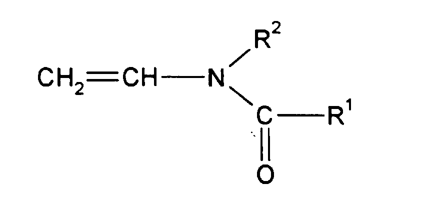 in der R¹, R² = H oder C₁-C₆-Alkyl bedeuten,
b) 95 bis 1 Mol-% monoethylenisch ungesättigten Carbonsäuren mit 3 bis 8 C-Atomen und/oder deren Alkalimetall-, Erdalkalimetall- oder Ammoniumsalzen und gegebenenfalls
c) bis zu 30 Mol-% anderen monoethylenisch ungesättigten Verbindungen, die mit den Monomeren a) und b) copolymerisierbar sind, und gegebenenfalls
d) bis zu 2 Mol-% an Verbindungen, die mindestens zwei ethylenisch ungesättigte nicht-konjugierte Doppelbindungen im Molekül aufweisen,
und anschließende teilweise oder vollständige Abspaltung der Formylgruppen aus den in das Copolymerisat einpolymerisierten Monomeren unter Bildung von Amin-bzw. Ammoniumgruppen erhältlich.

Beispiele für weitere Vinylamincopolymerisate sind teilweise oder vollständige verseifte Copolymerisate aus Vinylcarbonsäureamiden mit Acrylnitril, wobei der Acrylnitrilanteil bis zu 80 Mol-%, bezogen auf zu polymerisierende Monomere, betragen kann. Derartige Copolymerisate werden z.B. in der DE-OS 4 328 975 beschrieben.

Bevorzugte Verbindungen B umfassen auch Polyvinylalkohole mit Aminfunktionalität, wie sie z.B. in der DE-OS 4 323 560 beschrieben sind. Dabei handelt es sich vorzugsweise um teilweise oder ganz hydrolysierte Copolymerisate aus Vinylacetat und 1 bis 25 Mol-%, bezogen auf zu polymerisierende Monomere, N-Vinylcarbonsäureamid, vorzugsweise N-Vinylformamid.

Die für das erfindungsgemäße Verfahren geeigneten cellulosehaltigen Materialien sind z.B. Papier oder papierähnliche Materialien wie Pappe oder Karton.

Bei der Verwendung der anionischen Polyisocyanate A und der kationischen Verbindungen B sind verschiedene Verfahrensvarianten möglich:

Bei Masseeinsatz kann die gegebenenfalls füffstoffhaltige Ausgangs-Faserrohstoff-Suspension zuerst mit der kationischen oder potentiell kationischen Verbindung B behandelt werden, beispielsweise durch Zugabe in Form einer wäßrigen Lösung oder Dispersion. Anschließend kann das anionische Polyisocyanat A in Form einer wäßrigen Lösung oder Dispersion direkt zugesetzt werden. In einer bevorzugten Ausführungsform wird im ersten Verfahrensschritt soviel der kationischen oder potentiell kationischen Verbindung B eingesetzt, daß die negativen Ladungen der Cellulose im Ausgangs-Faserrohstoff ganz oder nur teilweise kompensiert werden. Der Ladungszustand des Ausgangs-Faserrohstoffs kann beispielsweise durch Zetapotentialmessungen kontrolliert werden. Eine weitere Möglichkeit zur Prüfung der Ladungsverhältnisse besteht in der Titration überschüssiger kationischer und anionischer Ladungen in der Wasserphase der Faserrohstoffsuspension. In einer weniger bevorzugten Ausführungsform können die beiden Verfahrensschritte gleichzeitig durchgeführt werden, beispielsweise durch Vormischen der Komponenten vor der Zugabe.

Bei der technischen Durchführung des beschriebenen Verfahrens wird die nach den beiden Verfahrensschritten vorbehandelte Ausgangs-Faserrohstoff-Suspensionen in an sich bekannter Art und Weise durch sukzessive Entwässerung auf der Papiermaschine zu Papier, Pappe oder Karton verarbeitet.

Neben dem die soeben beschriebenen beiden Verfahrensschritte umfassenden Masse-Einsatz besteht die Möglichkeit, den ersten Verfahrensschritt in der Masse durchzuführen und das so gewonnene Rohpapier auf einer Leimpresse im zweiten Verfahrensschritt auf seiner Oberfläche mit dem anionisch oder potentiell anionischen Polyisocyanat A nachzubehandeln.

Nach einer besonderen Ausführingsform können als kationische Verbindungen handelsübliche Retentionsmittel, Entwässerungshilfsmittel oder Naßfestmittel eingesetzt werden, sofern sie den anspruchsgemäßen Forderungen genügen. Der Vorteil liegt nicht allein im günstigen Preis, sondern auch beispielsweise darin, daß bei sehr stark naßfest auszurüstenden, stark füllstoffhaltigen Papieren, wie z.B. Dekorpapier, die Einsatzmenge an konventionellen Naßfestmittel reduziert werden kann und durch hohe Aufwandsmengen konventioneller Naßfestmittel verursachte Effekte, wie z.B. die Aggregation der Füllstoffpartikel, unterbleiben.

Bei Kombination beispielsweise der stark kationischen Polyamin- bzw. Polyamidamin/Epichlorhydrin-Kondensate B mit den anionischen Polyisocyanaten A ist eine sehr gute Kontrolle der Ladungszustände in der wäßrien Faserrohstoff-Suspension möglich, die bei der Dekorpapierherstellung eine optimale Einstellung der Füllstoffretention und der Opazität erlaubt.

Das erfindungsgemäße Verfahren eignet sich somit nicht nur zur Herstellung besonders naßfest ausgerüsteter Papiere, wie z.B. Dekorpapier oder Etikettenpapier, sondern auch für Papiere mit besonderen Oberflächeneigenschaften, wie Wertpapier- oder Banknotenpapier.

Ähnlich der soeben beschriebenen Variante, wonach die kationische Verbindung B in der Masse eingesetzt, das anionische Polyisocyanat A hingegen auf die Oberfläche aufgebracht wird, kann auch ein Einsatz des Polyisocyanats A im Papierstrich erfolgen. Dabei wird das Polyisocyanat A zusammen mit der Streichfarbe auf das Rohpapier aufgetragen; der Papierstrich wird dadurch hinsichtlich Wasserfestigkeit und Naßrupffestigkeit verbessert.

Übliche Zusätze wie Stärke, optische Aufheller und Leimungsmittel können selbstverständlich mitverwendet werden.

Es ist besonders bevorzugt, die wäßrige Dispersion der Polyisocyanate A innerhalb von 60 Minuten, vorzugsweise innerhalb von 15 Minuten zum Faserstoff zu dosieren. Ganz besonders vorteilhaft ist eine kontinuierliche Herstellung und Zudosierung der wäßrigen Dispersion in den Stoffstrom der Papiermaschine. Hier ist eine Zugabe im Dickstoff bevorzugt, um aufgrund der hohen Stoffdichte und längerer Verweilzeiten eine optimale Wirksamkeit zu erhalten.

Das erfindungsgemäße Verfahren ergibt gebrauchsfertige Papiere mit guter Naßfestigkeit sofort an der Maschine.

Durch Lagerung des fertigen Papiers bei Raumtemperatur und/oder eine Nachkondensation bei erhöhter Temperatur kann eine Verstärkung von Naßfest- und Trockenfestwirkung erreicht werden. Generell wird aber bereits ab Maschine ein höheres Naßfestniveau erreicht als bei konventionellen Naßfestmitteln. Auch die Trockenfestigkeit ist gegenüber Produkten mit konventionellen Naßfestmitteln verbessert.

Das erfindungsgemäße Verfahren kann unter den in der Papierindustrie üblichen Verarbeitungstemperaturen, vorzugsweise bei 30 bis 70°C durchgeführt werden.

Durch geeignete Wahl der Ausgangskomponenten kann das Festigkeitsniveau des Papiers in der gewünschten Weise eingestellt werden. Das erfindungsgemäße Verfahren eignet sich nicht nur zur Herstellung von trockenfesten und wasserfesten Papieren, sondern auch zur Herstellung von öl- und benzinbeständigen Papieren. Wichtig ist auch die verbesserte Eigenretention und eine feststellbare Leimungswirkung. Teilweise Hydrophobie und Leimung ergeben eine verbesserte Beschreib- und Bedruckbarkeit.

In den folgenden Beispielen sind die Prozentangaben Gewichtsprozente, sofern nicht anders angegeben; Teile sind Gewichtsteile.

### Beispiele

**1.) Wasserdispergierbare Isocyanate**
   **1.1 Wasserdispergierbares Isocyanat 1 (erfindungsgemäß)**
      81,3 g eines durch Trimerisierung eines Teils der Isocyanatgruppen von 1,6-Diisocyanatohexan hergestellten, Isocyanatgruppen aufweisenden Polyisocyanats, das im wesentlichen aus Tri-(6-isocyanato-hexyl)-isocyanurat und dessen höheren Homologen besteht, und einen NCO-Gehalt von 20,5 %, einen Gehalt an monomeren 1,6-Diisocyanatohexan von weniger als 0,3 % und eine Viskosität von 1000 mPa.s (25°C) aufweist, werden mit 16,7 g eines auf 2-(2-Methoxyethoxy)-ethanol gestarteten Polyethers auf Basis von Ethylenoxid mit einem Zahlenmittel des Molekulargewichts von 350 g/mol und einer Hydroxylzahl von 160 mg KOH/g unter Zugabe von 2 g Hydroxyethylsulfonsäure-Natriumsalz, gelöst in 300 ml Dimethylacetamid, über Nacht bei 60°C gerührt. Zur Aufarbeitung des Reaktionsgewichtes wird im Wasserstrahlvakuum bei 70°C/10 mbar das Lösungsmittel abdestilliert; danach enthält das Reaktionsprodukt noch 10 % Lösungsmittel. Der Isocyanatgehalt beträgt 11,1 %, die Viskosität bei 25°C 400 mPa.s
   **1.2 Wasserdispergierbares Isocyanat 2 (erfindungsgemäß)**
      82,6 g eines Polyisocyanates gemäß Beispiel 1.1 werden mit 16,9 g eines Polyethers gemäß Beispiel 1.1 unter Zugabe von 0,5 g Milchsäure bei 60°C reagieren gelassen. Es entsteht eine klare, ölige Substanz mit einem Isocyanatgehalt von 15,4 % und einer Viskosität von 2250 mPa.s bei 25°C.
   **1.3 Wasserdispergierbares Isocyanat 3 (erfindungsgemäß)**
      82,2 g eines Polyisocyanates gemäß Beispiel 1.1 werden mit 16,0 g eines Polyethers gemäß Beispiel 1.1 unter Zugabe von 1,0 g Milchsäure bei 60°C reagieren gelassen. Es entsteht eine klare, ölige Substanz mit einem Isocyanatgehalt von 14,3 % und einer Viskosität von 2250 mPa.s bei 25°C.
   **1.4 Wasserdispergierbares Isocyanat 4 (Vergleichsbeispiel entsprechend EP-A 582 166**
      82,2 g eines durch Trimerisierung ein Teils der Isocyanatgruppen von 1,6-Diisocyanatohexan hergestellten, Isocyanatgruppen aufweisenden Polyisocyanates, das im wesentlichen aus Tri-(6-isocyanat-hexyl)-isocyanurat und dessen höheren Homologen besteht, und einen NCO-Gehalt von 21,6 %, einen Gehalt an monomeren 1,6-Diisocyanatohexan von weniger als 0,3 % und eine Viskosität von 3000 mPa.s (25°C) aufweist, werden mit 16,7 g eines auf 2-(2-Methoxyethoxy)-ethanol gestarteten Polyethers auf Basis von Ethylenoxid mit einem Zahlenmittel des Molekulargewichts von 350 g/mol und einer Hydroxylzahl von 160 mg KOH/g unter Zugabe von 1 g Diethylaminoethanol 7 Stunden bei 60°C gerührt. Es entsteht eine klare, ölige Substanz mit einem Isocyanatgehalt von 14,4 % und einer Viskosität von 2708 mPa.s bei 25°C. Zur Herstellung eines gebrauchsfertigen wasserdispergierbaren Isocyanates werden 80 Gew.-% der hergestellten Substanz mit 20 % Propylenglykoldiacetat verdünnt.
      Sämtliche Reaktionsprodukte sind wasserklare, ölig aussehende Flüssigkeiten, welche sich in Wasser leicht (im Becherglas durch Umrühren mittels eines Spatels) dispergieren lassen.
**2. Kationische Polymere**
   **2.1 Kationisches Polymer 1**
      Ein primäre Aminogruppen enthaltendes Polymer vom Polyvinylamintyp, das unter dem Warenzeichen BASOCOLL PR 8546 von der Fa. BASF AG in den Handel gebracht wird. Anwendungsform: eine 11 % Feststoff enthaltende wäßrige Lösung.
   **2.2 Kationisches Polymer 2**
      Ein Polykondensationsprodukt aus Dicyandiamid und Diethylentriamin wie in DE-OS 3 940 481, Beispiel 1 beschrieben. Anwendungsform: eine 45 % Wirksubstanz enthaltende wäßrige Lösung.
      Herstellung:
      277,2 Teile Dicyandiamid werden in 240 Teilen Diethylenglykol suspendiert und mit 309 Teilen Diethylentriamin vermischt, wobei die Temperatur auf ca. 40 bis 45°C ansteigt. 24 Teile Ammonchlorid werden zugesetzt, und die Mischung wird in 20 Minuten auf 110°C erhitzt, wobei ab 50°C Ammoniak-Entwicklung einsetzt. Das entweichende Ammoniak wird in einer Tiefkühlfalle aufgefangen. Das Reaktionsgemisch wird durch kontinuierliche Temperatursteigerung in 2 Stunden auf 150°C erhitzt und 60 Minuten bei 150°C gerührt. Die Ammoniak-Entwicklung hat dann fast vollständig aufgehört, es ist eine klare hochviskose Schmelze entstanden. Man läßt die Reaktionsmischung auf ca. 140°C abkühlen und läßt rasch 600 Teile Wasser einlaufen, wobei eine klare Lösung entsteht, die auf 40 bis 50°C abgekühlt wird. Mit 275 Teilen 36,5%iger Salzsäure wird die Lösung unter Kühlung auf einem pH-Wert von 6,5 bis 7,0 eingestellt. Man erhält 1555 g einer klaren, hellgelben Lösung mit einem Feststoffgehalt von 49,5 % (3 Stunden Trocknen im Vakuum bei 100°C). In der Tiefkühlfalle wurden 119,5 g Ammoniak aufgefangen.
   **2.3 Kationisches Polymer 3**
      Eine kationische Stärke, die unter dem Warenzeichen Emcat C3 von der Fa. Emsland-Stärke GmbH in den Handel gebracht wird. Anwendungsform: als Feststoff.
   **2.4 Kationisches Polymer 4**
      a) 2,45 kg Diethylentriamin werden mit 3,39 kg Adipinsäure in der Schmelze kondensiert. Dabei werden 0,84 kg Reaktionswasser abgespalten. Nach der Reaktion wird die gesamte Schmelze in 5,00 kg Wasser aufgelöst.
      b) 1,09 kg des gemäß Vorschrift a) hergestellten Vorkondensates (wäßrige Lösung) werden bei Raumtemperatur mit 3,58 kg Wasser gemischt. Bei gleicher Temperatur werden 0,18 kg Epichlorhydrin innerhalb 30 min zudosiert und das Reaktionsgemisch für 3 Stunden gerührt. Danach wird auf 55°C aufgeheizt und noch 0,01 kg des gemäß Vorschrift a) hergestellten Vorkondensates zudosiert. Wird eine Viskosität von 100 mPas erreicht, so wird die Reaktion durch Zugabe von 0,09 kg Schwefelsäure (48 %) abgestoppt und die wäßrige Lösung mit Ameisensäure auf einen pH-Wert von 2,8 eingestellt.

      Die hier verwendete Anwendungsform ist eine 15 % Feststoff enthaltende wäßrige Lösung.
   **2.5 Kationisches Polymer 5**
      a) 3,76 kg eines Polyamingemisches (Polyethylenpolyamingemisch) mit einem Basen-Äquivalent-Gewicht von 50 g/ Val Basen-Stickstoff und einer Viskosität von 250 mPas bei 20°C werden mit 1,65 kg Adipinsäure in der Schmelze kondensiert. Dabei werden 0,41 kg Reaktionswasser abgespalten. Nach der Reaktion wird die Schmelze in 5,00 kg Wasser aufgelöst.
      b) 4,68 kg des gemäß Vorschrift a) hergestellten Vorkondensates (wäßrige Lösung) werden bei Raumtemperatur mit 5,18 kg Wasser vermischt; bei 125°C werden dann unter Rühren 0,19 kg Dichlorethan in den geschlossenen Reaktor zudosiert. Nach der Reaktion (Reaktionsdauer 1 bis 2,5 Stunden) wird der Reaktor nach Abkühlen entspannt und das Produkt entgast. Im Anschluß wird über ein 100 µm Perlonfilter filtriert.

      Die hier verwendete Anwendungsform ist eine 28 bis 29 % Feststoff enthaltende wäßrige Lösung.
   **2.6 Kationisches Polymer 6**
      a) 2,54 kg Diethylentriamin werden mit 3,27 kg Adipinsäure in der Schmelze kondensiert. Dabei werden 0,81 kg Reaktionswasser abgespalten. Nach der Reaktion wird die gesamte Schmelze in 5,00 kg Wasser aufgelöst.
      b) 3,56 kg des unter a) beschriebenen Vorkondensates (wäßrige Lösung) werden zusammen mit 0,31 kg Diethylentriamin und 5,72 kg Wasser vermischt bei 125°C im geschlossenen Reaktor vorgelegt. Wie in Abschnitt 2.5 beschrieben, werden dann unter Rühren 0,41 kg Dichlorethan zudosiert. Die Reaktionszeit beträgt ca. 3 Stunden. Nach dem Abkühlen erfolgt das Entspannen und Entgasen des Reaktionsgemisches.

      Die hier verwendete Anwendungsform ist eine 25 % Feststoff enthaltende wäßrige Lösung.

### Anwendungsbeispiele 1 bis 7 (erfindungsgemäß) und 8 bis 15 (Vergleich)

Zellstoff (Kiefern-Birkensulfat im Gewichtsverhältnis 80:20) wird bei einer Stoffdichte von 2,5 % im Holländer auf einen Mahlgrad von 38° SR gemahlen. Sodann werden jeweils 100 g der erhaltenen Zellstoffsuspension in Bechergläsern mit Wasser auf 1000 ml Volumen verdünnt.

Die in der nachfolgenden Tabelle 1 dargelegten Mengen der kationischen Polymeren (Gew.-% Anwendungsform, bezogen auf Zellstoff) werden unter Rühren mittels eines Magnetrührers zugegeben und für 10 Minuten rühren gelassen. Sodann erfolgt die Zugabe des Isocyanats (Gew.-% Wirksubstanz, bezogen auf Zellstoff) in Form einer 1%igen wäßrigen Dispersion. Die Zellstoff-Dispersionen werden danach von 3 Minuten gerührt.

Danach werden mit den Inhalten der Bechergläser auf einem Blattbildner (Rapid-Köthen-Gerät) Papierblätter mit einem Flächengewicht von ca. 80 g/m² gebildet (gemäß DIN 54358, Teil 1). Die Papierblätter werden bei 85°C 8 Minuten im Vakuum bei 50 mm Hg getrocknet und im Trockenschrank noch 10 Minuten bei 110°C nachgeheizt.

Aus jedem Papierblatt werden nach erfolgter Klimatisierung 5 Prüfstreifen von 1,5 cm Breite ausgeschnitten und 5 Minuten in destilliertes Wasser eingetaucht. Sodann werden die nassen Streifen auf einer Zugprüfmaschine (DIN 53112, Teil 2) sofort auf ihre Naßbruchlast geprüft. Außerdem werden mit dem Tropfentest die Leimungseigenschaften des hergestellten Papiers geprüft. Dazu wird ein Wassertropfen auf das Blatt Papier aufgetragen und mit der Stoppuhr die Zeit ermittelt, die bis zum Aufsaugen des Tropfens verstreicht.

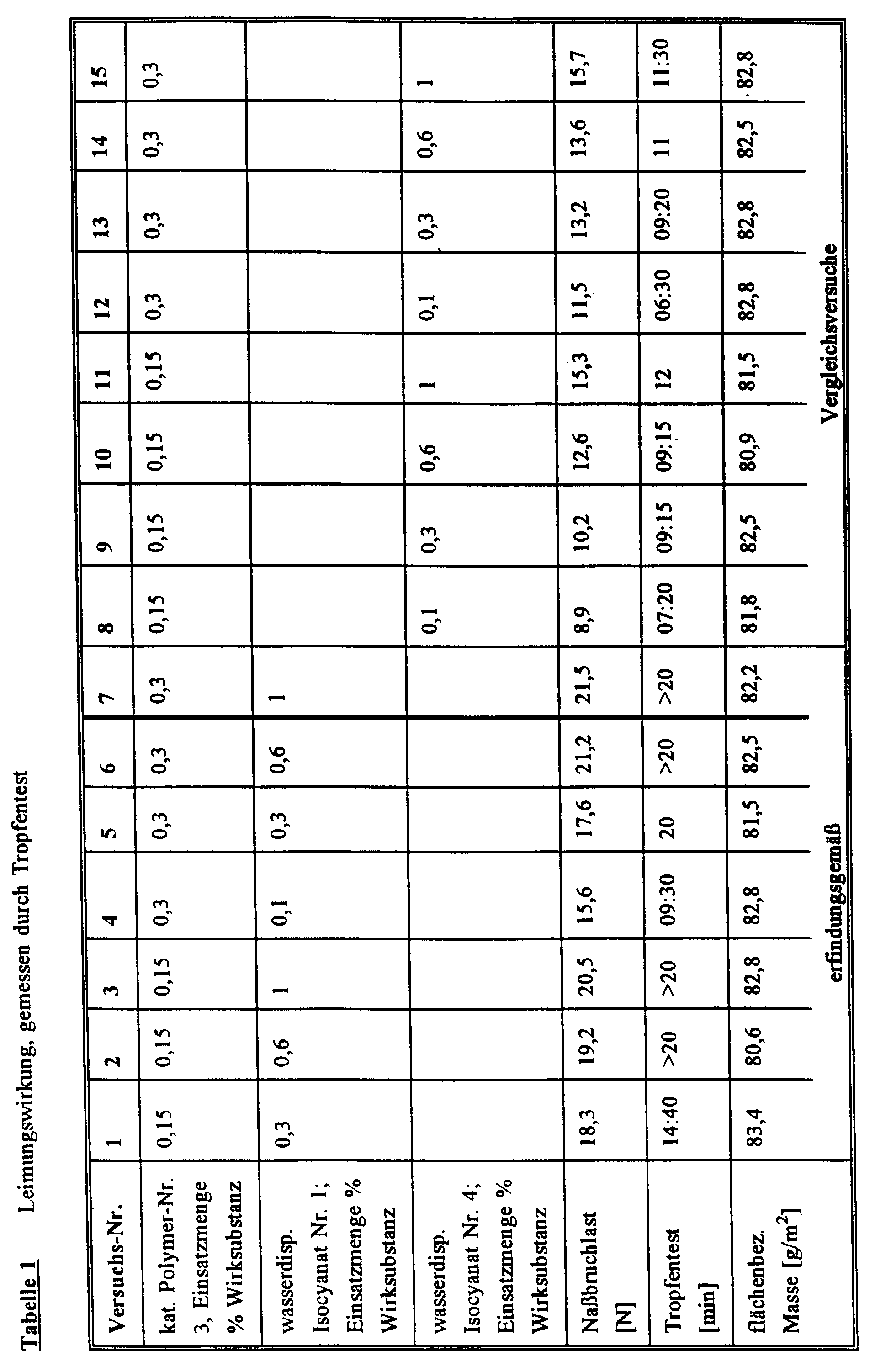

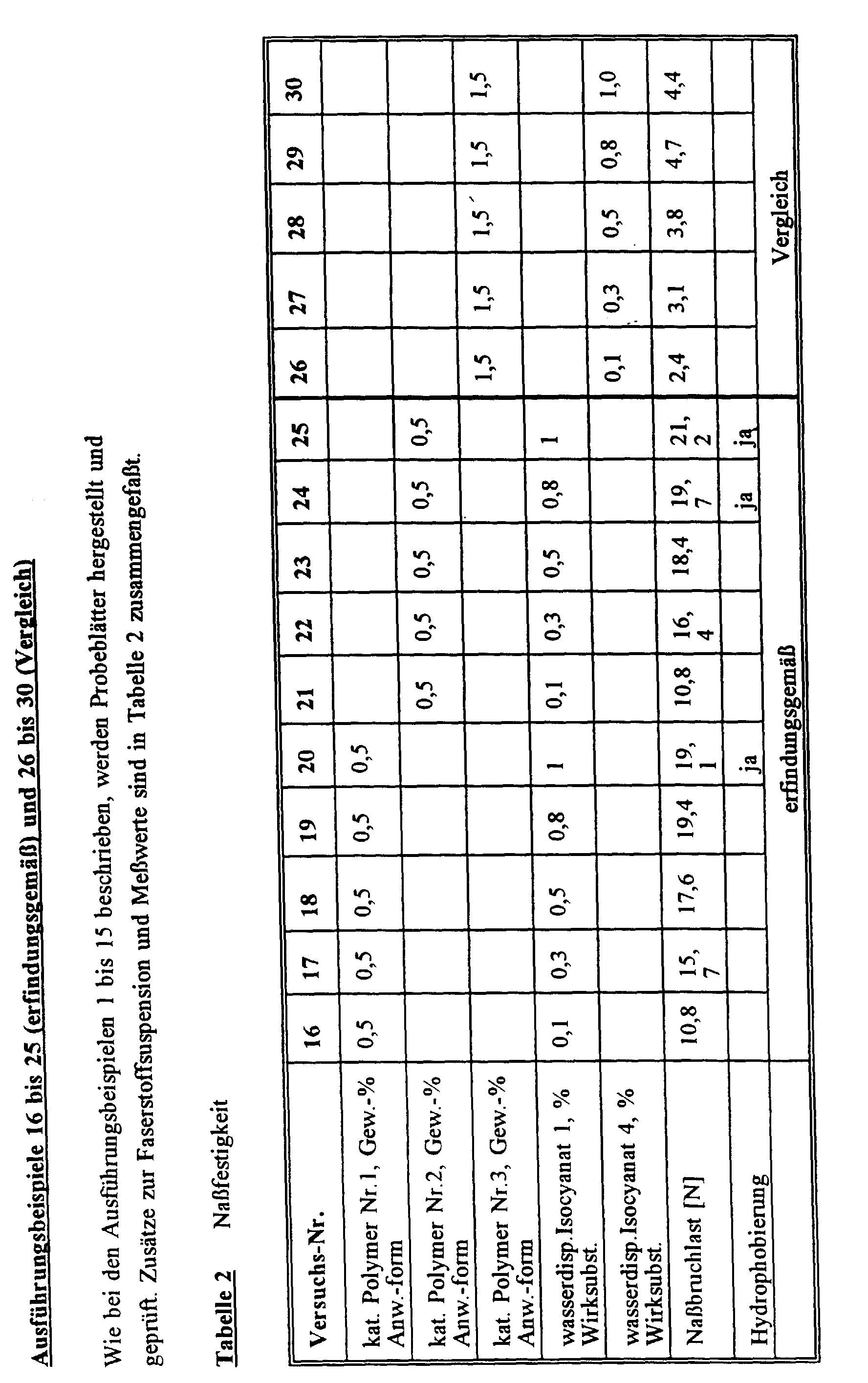

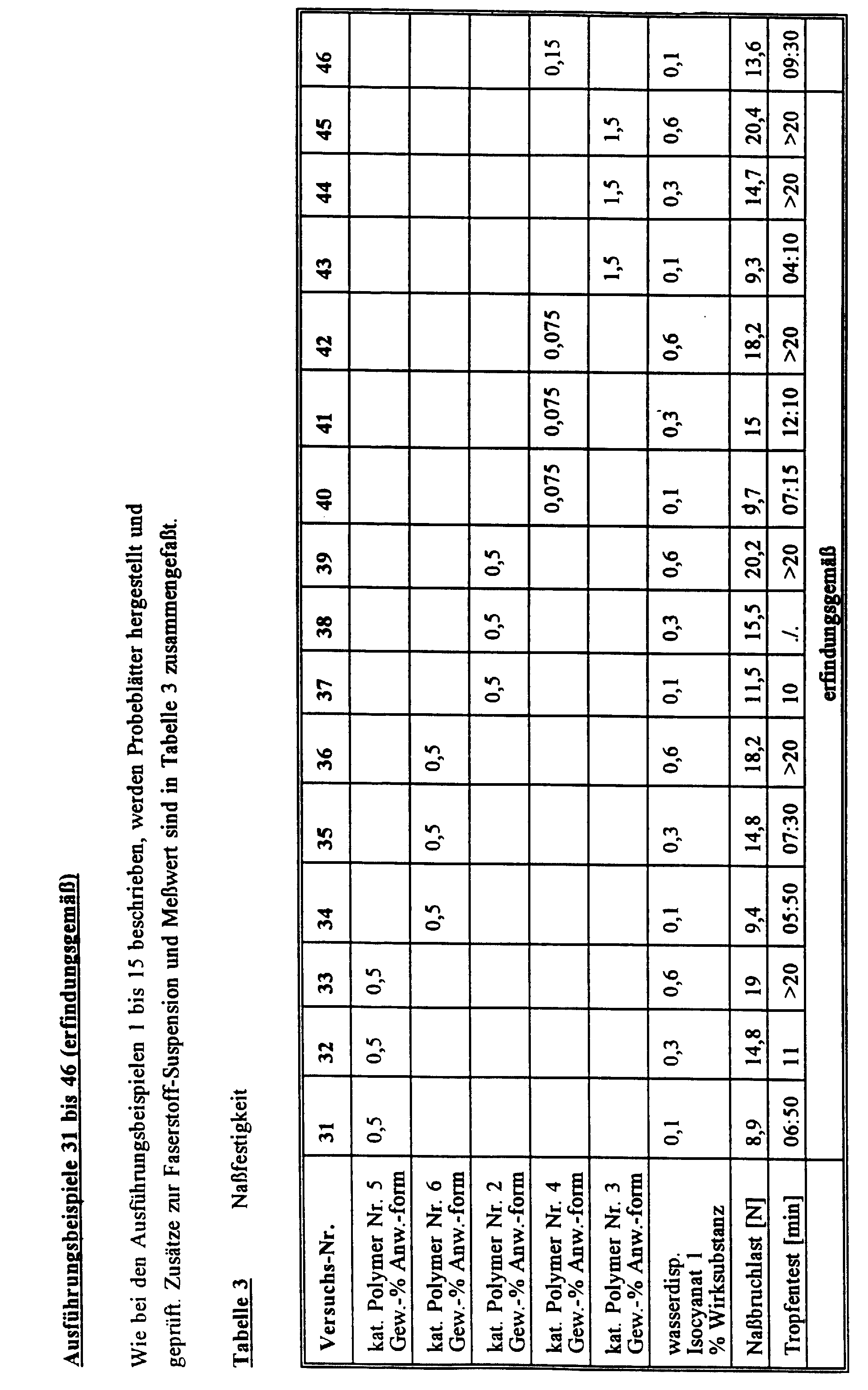

### Beispiele 47 bis 60: Versuche zur Herstellung von Dekorpapier

Ein Zellstoffgemisch aus Eukalyptus-ECF/Kiefernsulfat (im Verhältnis 80:20) wird im Holländer auf einen Mahlgrad von 28 bis 30° SR gemahlen und dann mit 80 Gew.-% TiO₂ (BAYERTITAN R-PL-1) (bezogen auf Zellstoff) versetzt. Die wäßrige Suspension wird wie in den Beispielen 1 bis 19 hergestellt, jedoch mit Schwefelsäure auf einen pH-Wert von 6 bis 6,8 eingestellt. Auf einer Blattbildungsanlage der Bauart Rapid-Köthen werden sodann Blätter hergestellt. Die Angaben in Gew.-% beziehen sich auf die Anwendungsform der Produkte und auf den eingesetzten Zellstoff. Naßbruphlasten werden wie oben beschrieben ermittelt, der CIE-Weißgrad nach ISO TC 38 Textil und der Aschegehalt durch Veraschung des Papiers.

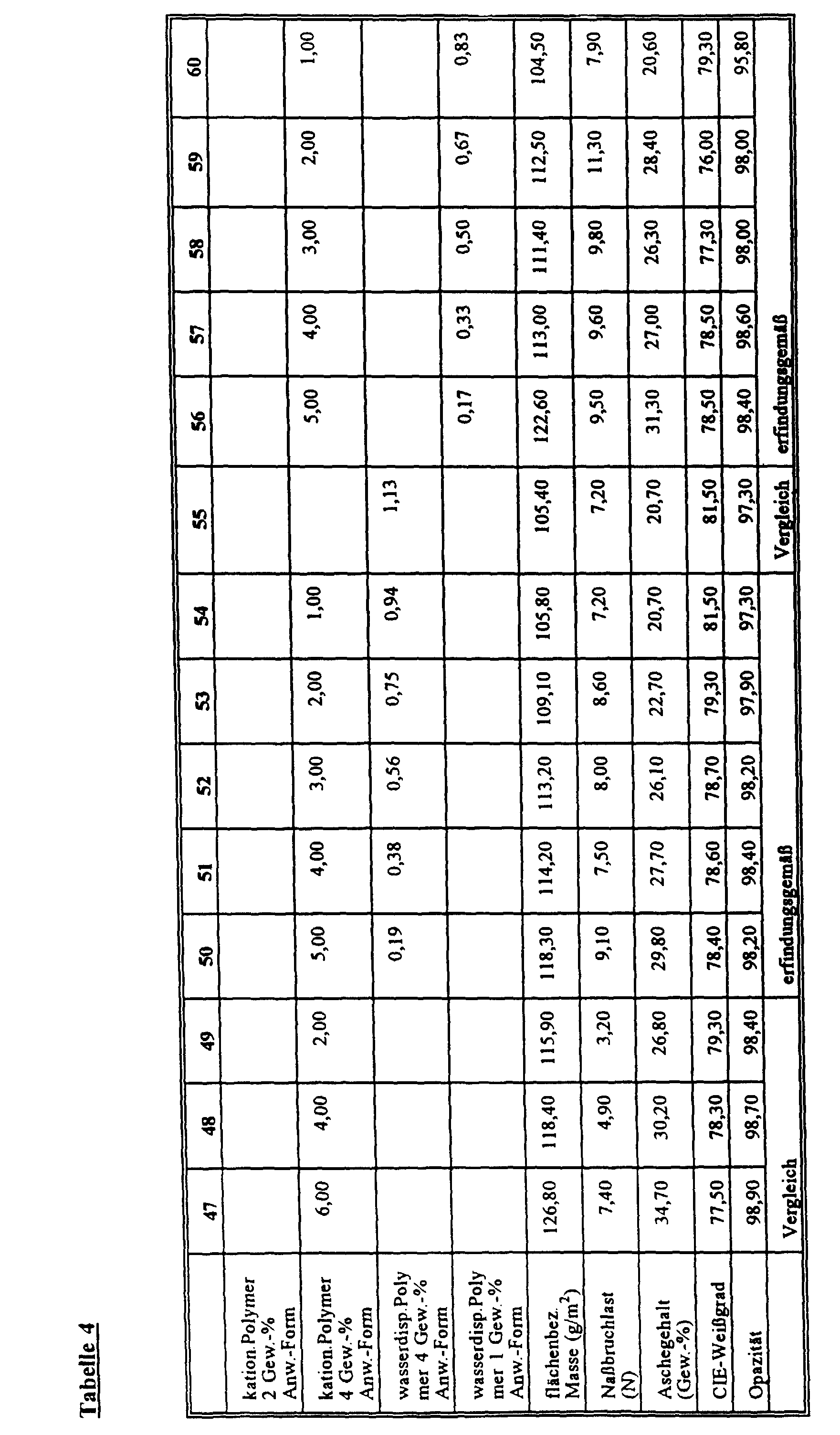

## Patentansprüche

1. Verfahren zur Papierveredlung, wonach man
A) Polyisocyanat mit einem NCO-Gehalt von 1 bis 21,5 Gew.-% und 50 bis 5000 Milliäquivalenten anionischen und/oder potentiell anionischen Gruppen pro 100 g Polyisocyanat A und
B) Verbindung mit 5 bis 5000 Milliäquivalenten kationischen und/oder potentiell kationischen Gruppe pro 100 g Verbindung B
in die Pulpe
oder Verbindung B in die Pulpe und Polyisocyanat A auf die Oberfläche des Cellulose-haltigen Rohpapiers
in solchen Mengen dosiert, daß das Gewichtsverhältnis Faserrohstoff : A : B 100 : (0,001 bis 25) : (0,001 bis 25) beträgt - jeweils bezogen auf Feststoff (trocken).

2. Verfahren nach Anspruch 1, wonach das Polyisocyanat A einen NCO-Gehalt von 4 bis 20 Gew.-% besitzt.

3. Verfahren nach Anspruch 1, wonach das Polyisocyanat A 50 bis 3500 Milliäquivalente anionische und/oder potentiell anionische Gruppen pro 100 g Polyisocyanat A enthält.

4. Verfahren nach Anspruch 1, wonach Verbindung B 50 bis 3500 Milliäquivalente kationische und/oder potentiell kationische Gruppen pro 100 g Verbindung B enthält.

5. Verfahren nach Anspruch 1, wonach das Gewichtsverhältnis Faserrohstoff: A : B 100 : (0,1 bis 10) : (0,01 bis 10) beträgt - jeweils bezogen auf Feststoff trocken.

6. Verfahren nach Anspruch 1, wonach man der Pulpe zuerst Verbindung B und anschließend Polyisocyanat A zusetzt.

7. Verfahren nach Anspruch 1, wonach man Verbindung B der Pulpe zusetzt und Polyisocyanat A auf die Oberfläche des Rohpapiers appliziert.

8. Mit Polyisocyanat A und kationischer Verbindung B (jeweils wie in Anspruch 1 definiert) veredelte Papiere.

## Claims

1. Process for finishing paper, in which
A) a polyisocyanate having an NCO content of 1 to 21.5% by weight and 50 to 5,000 milliequivalents of anionic and/or potentially anionic groups per 100 g of polyisocyanate A and
B) a compound having 5 to 5,000 milliequivalents of cationic and/or potentially cationic groups per 100 g of compound B
are metered into the pulp,
or compound B is metered into the pulp and polyisocyanate A is metered onto the surface of the cellulose-containing base paper
in amounts such that the weight ratio of fibre raw material : A : B is 100 : (0.001 to 25) : (0.001 to 25) - in each case based on the solid (dry).

2. Process according to Claim 1, in which the polyisocyanate A has an NCO content of 4 to 20% by weight.

3. Process according to Claim 1, in which the polyisocyanate A contains 50 to 3,500 milliequivalents of anionic and/or potentially anionic groups per 100 g of polyisocyanate A.

4. Process according to Claim 1, in which compound B contains 50 to 3,500 milliequivalents of cationic and/or potentially cationic groups per 100 g of compound B.

5. Process according to Claim 1, in which the weight ratio of fibre raw material : A : B is 100 (0.1 to 10) : (0.01 to 10) - in each case based on the solid (dry).

6. Process according to Claim 1, in which compound B is first added to the pulp and polyisocyanate A is then added.

7. Process according to Claim 1, in which compound B is added to the pulp and polyisocyanate A is applied to the surface of the base paper.

8. Papers finished with polyisocyanate A and cationic compound B (in each case as defined in Claim 1).

## Revendications

1. Procédé pour l'ennoblissement du papier selon lequel on ajoute
A) un polyisocyanate à une teneur en NCO de 1 à 21,5 % en poids, contenant 50 à 5 000 milliéquivalents de groupes anioniques et/ou potentiellement anioniques pour 100 g de son poids et
B) un composé contenant 5 à 5 000 milliéquivalents de groupes cationiques et/ou potentiellement cationiques pour 100 g de son poids
à la pâte,
ou bien le composé B à la pâte et le polyisocyanate A à la surface du papier brut cellulosique,
en quantités correspondant à des proportions relatives en poids matière première fibreuse/A/B de 100 : (0,001 à 25) : (0,001 à 25) - dans tous les cas par rapport aux matières solides (sèches).

2. Procédé selon la revendication 1, selon lequel le polyisocyanate A a une teneur en NCO de 4 à 20 % en poids.

3. Procédé selon la revendication 1, selon lequel le polyisocyanate A contient, pour 100 g, 50 à 3 500 milliéquivalents de groupes anioniques et/ou potentiellement anioniques.

4. Procédé selon la revendication 1, selon lequel le composé B contient, pour 100 g, 50 à 3 500 milliéquivalents de groupes cationiques et/ou potentiellement cationiques.

5. Procédé selon la revendication 1, selon lequel les proportions relatives en poids matière première fibreuse/A/B sont de 100 : (0,1 à 10) : (0,1 à 10) - dans tous les cas sur les matières solides sèches.

6. Procédé selon la revendication 1, selon lequel on ajoute à la pâte d'abord le composé B puis le polyisocyanate A.

7. Procédé selon la revendication 1, selon lequel on ajoute d'abord le composé B à la pâte puis on applique le polyisocyanate A à la surface du papier brut.

8. Papiers ennoblis à l'aide du polyisocyanate A et du composé cationique B (tels que définis dans la revendication 1).
